# EUROPÄISCHE PATENTSCHRIFT

(11) **EP 2 460 584 B1**
(45) Veröffentlichungstag und Bekanntmachung des Hinweises auf die Patenterteilung: **06.04.2016**
(21) Anmeldenummer: 12151430.1
(22) Anmeldetag: 14.01.2008
(51) Int. Cl.: B01J 8/04, B01J 8/06, B01J 23/22, B01J 23/24, B01J 23/28, B01J 23/30, B01J 23/75, B01J 23/755, B01J 27/04, B01J 27/043, B01J 27/047, C01B 17/02, C01B 17/16

(54) **Vorrichtung zur kontinuierlichen Herstellung von Schwefelwasserstoff**
Apparatus for continuously preparing hydrogen sulfide
Dispositif de fabrication continue d'hydrogène sulfuré

(30) Priorität: 16.01.2007 EP 07100586
(43) Veröffentlichungstag der Anmeldung: 06.06.2012
(62) Teilanmeldung aus: 08701450.2
(73) Patentinhaber: BASF SE, 67056 Ludwigshafen am Rhein (DE)
(72) Erfinder: Wölfert, Andreas, 74906 Bad Rappenau (DE); Jachow, Harald, 64625 Bensheim (DE); Driess, Heinz, 67071 Ludwigshafen (DE)
(74) Vertreter: BASF IP Association

(56) Entgegenhaltungen:
- WO-A1-2004/028963
- US-A- 1 476 645
- US-A- 1 700 578
- US-A- 2 214 859
- US-A- 2 876 070
- US-A- 2 876 071

## Beschreibung

Die Erfindung bezieht sich auf eine Vorrichtung zur kontinuierlichen Herstellung von Schwefelwasserstoff H₂S durch Umsetzung eines Eduktgemischs, welches gasförmigen Schwefel und Wasserstoff enthält, an einem festen Katalysator.

Die Herstellung von Schwefelwasserstoff erfolgt im Stand der Technik z.B. durch das H₂S-Verfahren nach Girdler (Ullmann's Encyclopedia of Industrial Chemistry, Sixth Edition, 2003, Vol. 17, Seite 291). H₂S wird dabei unkatalytisch aus den Elementen Schwefel und Wasserstoff in einer Kolonne mit Einbauten und einem im Wesentlichen horizontal ausgerichteten, erweiterten Sumpf hergestellt. In den mit siedendem Schwefel gefüllten Sumpf wird Wasserstoff eingeleitet, welcher Schwefel in die aufsteigende Gasphase strippt. Wasserstoff und aufsteigender Schwefel reagieren im Gasraum der Kolonne, wobei die dabei freiwerdende Reaktionswärme dem Produktgas durch Wäsche mit flüssigem Schwefel entzogen wird. Dazu wird aus dem Sumpf der Kolonne flüssiger Schwefel abgezogen, mit frischem, kaltem Schwefel gemischt und am Kopf der Kolonne aufgegeben. Das Produktgas, das weitgehend Schwefelwasserstoff enthält, wird in zwei Wärmetauschern abgekühlt. Als nachteilig erweist sich, dass das Verfahren unter Druck und bei erhöhter Temperatur durchgeführt werden muss. Die erhöhte Temperatur führt zu verstärkten Korrosionsraten und Materialabtrag an den Reaktorwänden. Im Falle einer Leckage treten aufgrund des erhöhten Drucks größere Mengen an giftigem H₂S aus. Weiterhin nachteilig ist, dass das Produkt noch erhebliche Mengen an nicht abreagiertem Wasserstoff (3 Vol.-%) und an weiteren Verunreinigungen (2 Vol.-%) enthält.

GB 1,193,040 bezieht sich auf ein Verfahren zur Herstellung von H₂S aus den Elementen bei erhöhter Temperatur und erhöhtem Druck. Die Reaktion wird in einer Kolonne mit Einbauten ausgeführt, wobei der Wasserstoff am unteren Ende des Reaktors und überschüssiger geschmolzener Schwefel am oberen Ende des Reaktors zugeführt werden. Die Reaktion läuft bei einer Temperatur von 400 bis 600 °C (bevorzugt 450 bis 540 °C) und einem Druck von 4,0532 bis 15,1995 bar (-4 bis 15 atm) (bevorzugt 5,0665 bis 12,1596 bar (bevorzugt 5 bis 12 atm)) ab. Nachteilig sind dabei die hohe Temperatur im Hinblick auf Korrosion und der Druck aus sicherheitstechnischen Gründen.

US 5,173,285 betrifft ein Verfahren zur Herstellung von Schwefelwasserstoff durch Reaktion von Schwefel und Wasserstoff. Die Herstellung erfolgt zweistufig bei einem Überdruck von 0,3 bis 30 kg/cm², bevorzugt 3 bis 30 kg/cm² und einer Temperatur zwischen 250 und 600 °C, bevorzugt 300 bis 450 °C. Nachteilig ist der in den beschriebenen Ausführungsformen verwendete hohe Druck. Ein weiterer Nachteil ist der Restwasserstoffgehalt von 3,2 % im Produktgas.

DE 3 437 010 A1 hat ein Verfahren zur Herstellung von Schwefelwasserstoff aus den Elementen zum Gegenstand. Die Herstellung erfolgt in einer Flamme bei Temperaturen zwischen 650 und 1300 °C. Die Ausgangssubstanzen, Schwefel und Wasserstoff, werden im Molverhältnis 0,8 bis 1,2 : 1 eingesetzt, vorzugsweise im stöchiometrischen Verhältnis. Nachteilig ist bei diesem Verfahren die hohe Temperatur, die zu einer erhöhten Korrosion der Anlage führt.

FR 2 765 808 A1 bezieht sich auf ein weiteres Verfahren zur Herstellung von Schwefelwasserstoff unter Druck und bei Temperaturen oberhalb von 350 °C bis 465 °C an einem Katalysator bei Wasserstoffüberschuss unter Verwendung eines Doppelrohrgegenstromverdampfers für den Schwefel. Dabei wird der Wasserstoff durch den H₂S-Strom aus der Reaktionsstufe aufgeheizt. Der heiße Wasserstoff gibt seine Wärme an den Schwefelstrom ab und wird in den Schwefel, der in den Wärmetauscherraum geführt wird, eingemischt. Ein Teil des H₂S wird rückgeführt, um damit zu verhindern, dass der Schwefel mit Wasserstoff zu hohe Viskositäten aufbaut. Nachteilig ist der relativ hohe apparative Aufwand durch die zweifach indirekte Aufheizung. Zuerst heizt H₂S den Wasserstoff. Dann heizt der Wasserstoff den Schwefel. Sicherheitstechnisch nachteilig ist weiterhin die Fahrweise unter hohem Druck (> 10 bar im Beispiel).

US 2,214,859 betrifft ein Verfahren zur Herstellung von Schwefelwasserstoff. Die Herstellung erfolgt bei einem Schwefelüberschuss von 4 : 2 bis 1,5 : 2 (Verhältnis atomarer Schwefel : atomarer Wasserstoff). Die Synthesereaktion wird bei 500 bis 800 °C an einem Co-, Ni-, Mo-Oxid- oder -Sulfid-Katalysator durchgeführt. Nachteilig ist der hohe Energieverbrauch des Verfahrens durch eine fehlende Nutzung der Reaktionswärme. Weiterhin nachteilig sind die zu verstärkter Korrosion führenden hohen Temperaturen, bei denen die Reaktion durchgeführt wird. Nachteilig ist auch, dass der Umsatz des Wasserstoffs maximal 98 % beträgt.

Eine katalytische Herstellung von H₂S wird in Angew. Chem.; 74 Jahrgang 1962; Nr. 4; Seite 151 beschrieben. Dabei wird Wasserstoff durch ein von außen temperiertes Schwefelbad geleitet. Der mit Schwefeldampf beladene Wasserstoff tritt durch Bohrungen in einen Katalysatorraum ein. Nicht abreagierter Schwefel wird nach Verlassen des Katalysatorraums in einem oberen Teil des H₂S-Auslassrohres kondensiert und gelangt über ein Rücklaufrohr in das Schwefelbad zurück. Der Katalysatorraum ist konzentrisch um das H₂S-Auslassrohr angeordnet. Nachteilig bei dem Verfahren in technischem Maßstab ist, dass die Reaktionswärme nicht zur Erwärmung des Schwefelbads genutzt wird, sondern die Erwärmung über den Mantet des Schwefelbads erfolgt.

Aus DE 1 113 446 ist die katalytische Herstellung von Schwefelwasserstoff durch Umsetzung eines stöchiometrischen Gemisches von Wasserstoff und Schwefel an einem Kobalt- und Molybdänsalz auf einem Träger enthaltenden Katalysator bei Temperaturen zwischen 300 und 400°C bekannt. Der Katalysator ist hierbei in Rohren angeordnet, die von dem Gemisch von Wasserstoff und Schwefel durchströmt werden. Das Schwefelbad hat eine Temperatur von 340 bis 360°C, wodurch eine stöchiometrische Mischung von Wasserstoff und Schwefel durch Durchleiten von Wasserstoff durch das Schwefelbad für die Herstellung von H₂S erzeugt wird. Die bei der H₂S-Bildung freiwerdende Reaktionswärme wird durch direkten Wärmeaustausch genutzt, da die den Katalysator enthaltenden Rohre im Schwefelbad auf eine nicht näher beschriebene Art angeordnet sind. Im Dauerbetrieb wird mit dem Verfahren gemäß DE 1 113 446 keine vollständige Umsetzung des Wasserstoffs erreicht.

Weitere Verfahren zur Herstellung von Schwefelwasserstoff werden beispielsweise in CS 190792 und CS 190793 beschrieben, wobei jedoch keine Angaben zu dem Druck in dem Reaktor während der Synthesereaktion gemacht werden. Ein weiteres Herstellungsverfahren wird in Ullmann's Enzyklopädie der technischen Chemie, 4. Auflage, Band 21, Seite 171 erläutert.

US 2,876,071 beschreibt ein Verfahren zur Herstellung von H₂S bei dem in eine Reaktionszone eines Reaktors erhitzter Wasserstoff in eine Schwefelschmelze eingeleitet wird und in der Gasphase zu Schwefelwasserstoff reagiert.

US 2,876,070 betrifft einen Reaktor zur Herstellung von Schwefelwasserstoff. Der Reaktor, in dem sich eine Schwefelschmelze und darüber ein Gasraum befindet, umfasst eine nach unten offenen Haube mit einem sich nach unten erstreckenden, zackenförmigen Rand. Über eine am Boden des Reaktors verlaufende, perforierte Leitung wird Wasserstoff in eine Schwefelschmelze eingeleitet. Der Wasserstoff steigt in der Schwefelschmelze auf und sammelt sich mit Schwefelwasserstoff und Schwefelgas in einer Gasphase in einem durch die Haube begrenzten Gasraum. Die Gasphase wird derart umgeleitet, dass sie in an dem zackenförmigen Rand in Gasblasen zerteilt und erneut durch die Schwefelschmelze geführt wird. An den Reaktor schließen sich Wärmetauscher an, die über eine Rohrleitung mit dem Reaktor verbunden sind zur Zurückführung von aus dem Produktgasstrom auskondensierten Schwefel.

US 1,700,578 beschreibt ein Verfahren und einen Reaktor zur Herstellung von Schwefelwasserstoff, wobei der Reaktor Rohre enthält, die in eine Schwefelschmelze eingetaucht sind. An den unteren Enden der Rohre sind Düsen angeordnet, durch die Wasserstoff in die Rohre eingeleitet wird. Auf den Reaktor ist ein Kühler aufgesetzt, in dem auskondensierbare Komponenten aus dem Produktgasstrom durch Kondensation und anschließender Rückführung in den Reaktor entfernt werden.

Aufgabe der vorliegenden Erfindung ist es, eine Vorrichtung zur Herstellung von Schwefelwasserstoff bereitzustellen, die die Nachteile des Standes der Technik vermeiden. Insbesondere ist es Aufgabe der Erfindung, eine Vorrichtung bereitzustellen, die eine nahezu vollständige Umsetzung des Wasserstoffs und/oder das Erreichen einer Schwefelwasserstoffreinheit in dem bei der Synthese anfallenden Rohgasstrom von ≥ 99,5 Vol.-% im Dauerbetrieb ermöglicht.

Diese Aufgabe wird gelöst durch den Gegenstand des Anspruchs 1. Ein Verfahren zur Herstellung von Schwefelwasserstoff H₂S erfolgt durch Umsetzung eines Eduktgemischs, welches gasförmigen Schwefel und Wasserstoff enthält, an einem festen Katalysator. Das Eduktgemisch wird bei einem Druck von 0,5 bis 10 bar (bevorzugt 0,75 bis 5 bar, besonders bevorzugt 1 bis 3 bar, ganz besonders bevorzugt 1,1 bis 1,4 bar) absolut, einer Temperatur von 300 bis 450 °C (bevorzugt 320 bis 425 °C, besonders bevorzugt 330 bis 400 °C) und einem Schwefelüberschuss in einem Reaktor umgesetzt. Der Schwefelüberschuss entspricht einem Verhältnis von überschüssigem Schwefel zu hergestelltem H₂S von 0,2 bis 3 kg (bevorzugt 0,4 bis 2,2 kg, besonders bevorzugt 0,6 bis 1,6 kg, ganz besonders bevorzugt 0,9 bis 1,2 kg) Schwefel pro kg hergestelltem H₂S.

Durch die Kombination der innerhalb der genannten Bereiche gewählten Parameter bei der Herstellung des Schwefelwasserstoffs wird im Dauerbetrieb des Reaktors eine Reinheit des bei der Synthesereaktion anfallenden Rohgasstroms (nachdem der überschüssige Schwefel in einem Kühler abgeschieden wurde) von mindestens 99,5 Vol.-% erreicht. Dabei reicht ein Schwefelüberschuss alleine nicht aus, um eine Schwefelwasserstoffreinheit von mindestens 99,5 Vol.-% zu erreichen (wie zum Beispiel aus der US 2,214,859 hervorgeht). Zur nahezu vollständigen Umsetzung des Wasserstoffs wird mit einem Schwefelüberschuss von ≥ 0,2 kg Schwefel pro kg erzeugtem H₂S gearbeitet. Überschüsse von mehr als 3 kg Schwefel pro kg H₂S sind ökonomisch nicht sinnvoll.

Mit der in dem Verfahren eingesetzten Parameterkombination (trotz niedriger Temperaturen von 300 bis 450 °C) im Dauerbetrieb eine nahezu vollständige Umsetzung des Wasserstoffs (< 0,5 Vol.-% im H₂S-haltigen Rohgasstrom) erreicht werden, ohne dass der Schwefelüberschuss in einer höheren Belastung des Katalysators resultiert.

Bei dem Verfahren kann aus Wasserstoff und Schwefel Schwefelwasserstoff mit hoher Reinheit und hoher Prozesssicherheit in einem einfachen apparativen Aufbau mit einstufiger Reaktion erzeugt werden. Die Synthesereaktion wird bei relativ niedrigen Temperaturen durchgeführt, bei denen nur geringe Korrosionsraten vorliegen. Die niedrigen Drücke sind aus sicherheitstechnischen Gründen vorteilhaft. Der niedrige Druck bedingt zum Beispiel bei Undichtigkeiten an Flanschen nur geringe Leckageraten. Das Verfahren ermöglicht eine Energieeffiziente Herstellung von Schwefelwasserstoff.

Gemäß einer bevorzugten Ausführungsform des Verfahrens werden als Katalysator Partikel bereitgestellt, die mindestens ein Element ausgewählt aus der Gruppe Ni, W, Mo, Co und V (bevorzugt Co und Mo) in oxidischer oder sulfidischer Form auf einem Träger aus Aluminiumoxid oder Siliciumoxid enthalten. Besonders bevorzugt findet die Reaktion der gasförmigen Edukte an einem Katalysator mit Co und Mo als aktive Komponenten auf Aluminiumoxid als Träger statt. Durch die Verwendung zum Beispiel eines Co-Mo-Katalysators können ausreichende Reaktionsraten bei vergleichsweise geringen Temperaturen (< 450 °C) und Drücken (insbesondere < 1,5 bar absolut) erreicht werden. Der Katalysator kommt vorzugsweise in Form eines geschütteten Festbetts für die vorliegende Erfindung zum Einsatz. Es können Formkörper beliebiger Gestalt eingesetzt werden. Der Katalysator kann zum Beispiel in Form von zylindrischen oder sternförmigen Stränglingen vorliegen.

Beispielsweise beträgt der Durchmesser der Formkörper 2 bis 12 mm, insbesondere zwischen 3 und 10 mm, besonders bevorzugt zwischen 4 und 8 mm und die Länge liegt vorzugsweise zwischen 2 und 12 mm, insbesondere zwischen 3 und 10 mm, besonders bevorzugt zwischen 4 und 8 mm. Die Katalysatorbelastungen liegen bei dem Verfahren vorzugsweise bei 0,08 bis 1, bevorzugt 0,13 bis 0,8, besonders bevorzugt 0,18 bis 0,6, ganz besonders bevorzugt 0,22 bis 0,4 Norm-m³ Wasserstoff pro Stunde und pro kg Katalysator. Norm-m³ bezeichnet dabei das Gasvolumen bei 0 °C und 1,013 bar absolut.

Gemäß einer bevorzugten Ausführungsform des Verfahrens wird die Umsetzung des Eduktgemischs in einer einstufigen Reaktion durchgeführt. Einstufige Reaktion bedeutet in diesem Zusammenhang, dass der Hauptanteil des als Edukt bereitgestellten Wasserstoffs in einem einzigen Reaktor umgesetzt wird. Die Umsetzung des Hauptteils bedeutet dabei, dass mindestens 80%, bevorzugt mindestens 90%, besonders bevorzugt mindestens 95%, ganz besonders bevorzugt mindestens 99% des Wasserstoffs in dem Reaktor umgesetzt wird. Durch eine einstufige Reaktionsführung in einem Reaktor (zum Beispiel einem Rohrbündelreaktor) ohne Nachreaktor lässt sich ein einfacher apparativer Aufbau verwirklichen. Bevorzugt wird das erfindungsgemäße Verfahren daher nur mit einstufiger (nicht mit mehrstufiger) Umsetzung von Schwefel und Wasserstoff durchgeführt.

Ferner erfolgt bei dem Verfahren die Sättigung des Reaktionsgemischs mit Schwefel bevorzugt einstufig und nicht mehrstufig, um den Reaktionsaufbau einfach zu halten.

Gemäß einer bevorzugten Ausführungsform des Verfahrens wird bei der Umsetzung des Eduktgemischs entstehende Reaktionswärme für eine Verdampfung des Schwefels genutzt. Dadurch wird ein energieeffizientes Verfahren erreicht. Vorzugsweise wird die Reaktionswärme durch mindestens eines der folgenden Verfahren einer Schwefelschmelze zugeführt, die Schwefel für das Eduktgemisch bereitstellt:
A) Der Katalysator wird in mindestens einem (vorzugsweise U-förmigen) Rohr angeordnet, wobei das Eduktgemisch in dem Rohr umgesetzt wird und das Rohr teilweise mit der Schwefelschmelze in Kontakt steht,
B) Gasförmiger Wasserstoff wird über einen Wärmetauscher durch Wärmeenergie eines in dem Reaktor bei der Umsetzung des Eduktgemischs erzeugten H₂S-haltigen Rohgasstroms erwärmt und der erwärmte Wasserstoff wird durch die Schwefelschmelze geleitet, und
C) die Wärmeenergie des bei der Umsetzung des Eduktgemischs erzeugten H₂S-haltigen Rohgasstroms wird über einen Wärmetauscher zum Erwärmen der Schwefelschmelze genutzt.

Gemäß Variante A) wird das Reaktionsrohr, das den Katalysator enthält, an dem die Reaktion durchgeführt wird, in der Schwefelschmelze positioniert. Im Zusammenhang mit der vorliegenden Erfindung bedeutet "in Kontakt stehen", dass eine Wärmeaustausch zwischen der Schwefelschmelze und dem Innenraum des Rohres über die Wandung des Rohres stattfinden kann. Das mindestens eine (bevorzugt U-förmige) Rohr taucht vorzugsweise teilweise in die Schwefelschmelze ein.

Ein Verfahren gemäß Variante B) kann beispielsweise wie in FR 2 765 808 beschrieben durchgeführt werden. Das Produkt (H₂S-haltiger Rohgasstrom) gibt Energie über einen Wärmetauscher an Wasserstoff ab, der dann den Schwefel aufwärmt.

Gemäß Variante C) ist es auch möglich, dass der heiße, H₂S-haltige Rohgasstrom Wärme über einen Wärmetauscher direkt an den Schwefel abgibt.

Gemäß einer bevorzugten Ausführungsform des Verfahrens wird zum Erhalten des Eduktgemischs gasförmiger Wasserstoff durch eine Schwefelschmelze in einen Eduktbereich des Reaktors geleitet, wobei die Schwefelschmelze eine Temperatur von 300 bis 450 °C, bevorzugt 320 bis 425 °C, besonders bevorzugt 330 bis 400 °C, aufweist. Dadurch wird Schwefel durch den Wasserstoff aus der Schwefelschmelze in die Gasphase gestrippt zum Erhalten des Eduktgemischs. Vorzugsweise wird mit der bei der exothermen Reaktion der H₂S-Bildung aus Schwefel und Wasserstoff frei werdenden Reaktionswärme der flüssige Schwefel aus der Schwefelschmelze in dem Reaktor verdampft. Die Verdampfung des Schwefels wird vorzugsweise durch Strippen mit gleichzeitig in die Schwefelschmelze eingeleitetem gasförmigem Wasserstoff, der durch den flüssigen Schwefel perlt, unterstützt. Die Verdampfungsrate des Schwefels wird erfindungsgemäß so eingestellt, dass die H₂S-Synthesereaktion mit einem Schwefelüberschuss durchgeführt wird, wobei der Schwefelüberschuss einem Verhältnis von überschüssigem Schwefel zu hergestelltem H₂S von 0,2 bis 3 kg, bevorzugt 0,4 bis 2,2 kg, besonders bevorzugt 0,6 bis 1,6 kg, ganz besonders bevorzugt 0,9 bis 1,2 kg Schwefel pro kg hergestelltem H₂S entspricht.

Es ist auch möglich, einen Teil des H₂S-haltigen Rohgasstroms in den flüssigen Schwefel zurückzuführen. Der rückgeführte Schwefelwasserstoff kann dazu verwendet werden, Schwefel in die Gasphase zu strippen. Er kann ferner dazu dienen, die Viskosität des Schwefels, der in der Reaktion umgesetzt werden soll, zu reduzieren. Bevorzugt ist jedoch ein Verfahren ohne Rückführung von H₂S-haltigem Rohgas, um einen einfachen apparativen Aufbau zu gewährleisten.

Gemäß einer bevorzugten Ausführungsform des Verfahrens wird ein aus dem Reaktor geleiteter H₂S-haltiger Rohgasstrom in einem Kühler (vorzugsweise auf 114 bis 165 °C) zum Abscheiden von überschüssigem Schwefel gekühlt und es wird in dem Kühler anfallender Schwefel in den Reaktor zur Herstellung von H₂S zurückgeführt.

Der aus dem Reaktor geleitete H₂S-haltige Rohgasstrom hat dabei vorzugsweise eine Temperatur von 290 bis 400 °C. Der überschüssige Schwefel wird zumindest teilweise in dem Kühler auskondensiert. Als Kühlmedium kann zum Beispiel 120 °C warmes Druckwasser in einem Sekundärkreis dienen. Vorzugsweise wird der in dem Kühler anfallende Schwefel in den Reaktor zur Herstellung von H₂S zurückgeführt. Der Schwefel kann dazu über eine spezielle Sammel- und Ableitkonstruktion in die Schwefelschmelze im Mantelraum des Reaktors zurückgeführt werden. Als Kühler wird für die vorliegende Erfindung vorzugsweise ein Rohrbündelwärmetauscher eingesetzt.

Vorzugsweise wird eine Leitung zwischen dem Kühler und dem Reaktor bereitgestellt, durch die der Rohgasstrom in einer Richtung von dem Reaktor in den Kühler und durch die zurückgeführter Schwefel in einer entgegengesetzten Richtung von dem Kühler in den Reaktor geleitet wird.

Die Vorrichtung zur kontinuierlichen Herstellung von Schwefelwasserstoff H₂S, umfasst
- einen Reaktor zum Umsetzen eines Eduktgemischs, enthaltend gasförmigen Schwefel und Wasserstoff an einem festen Katalysator bei einem Druck von 0,5 bis 10 bar (bevorzugt 0,75 bis 5 bar, besonders bevorzugt 1 bis 3 bar, ganz besonders bevorzugt 1,1 bis 1,4 bar) absolut, einer Temperatur von 300 bis 450 °C (bevorzugt 320 bis 425 °C, besonders bevorzugt 330 bis 400 °C) und einem Schwefelüberschuss, der einem Verhältnis von überschüssigem Schwefel zu hergestelltem H₂S von 0,2 bis 3 kg (bevorzugt 0,4 bis 2,2 kg, besonders bevorzugt 0,6 bis 1,6 kg, ganz besonders bevorzugt 0,9 bis 1,2 kg) Schwefel pro kg hergestelltem Schwefelwasserstoff entspricht und
- einen mit dem Reaktor verbundenen Kühler zum Kühlen eines aus dem Reaktor geleiteten H₂S-haltigen Rohgasstroms zum Kondensieren zumindest eines Teils des Schwefelüberschusses,
wobei zwischen dem Reaktor und dem Kühler eine Leitung angeordnet ist zum Leiten des Rohgasstroms in einer Richtung von dem Reaktor in den Kühler und zum Zurückführen von Schwefel in einer entgegengesetzten Richtung aus dem Kühler in den Reaktor. Die erfindungsgemäße Vorrichtung wird vorzugsweise zum Durchführen des dargestellten Verfahrens verwendet.

Der in dem Kühler aus dem H₂S-haltigen Rohgasstrom auskondensierte Schwefel kann beispielsweise am Boden desselben Rohres in den Reaktor zurücklaufen, durch das der H₂S-haltige Rohgasstrom aus dem Produktbereich des Reaktors in den Kühler geführt wird. Dadurch kann eine zusätzliche Rückführleitung vermieden werden. Diese vereinfachte Rohrleitungsführung hat u.a. den Vorteil, dass zwei Flansche gespart werden können, die mögliche Leckagestellen darstellen würden, aus denen der hochgiftige Schwefelwasserstoff austreten könnte. Ein weiterer Vorteil ist, dass die gemeinsame Leitung wie ein Gegenstromwärmetauscher wirkt, in dem der rücklaufende Schwefel den Schwefelwasserstoff kühlt. Der Kühler kann somit für eine geringere Kühlleistung konzipiert werden. Der rücklaufende Schwefel kühlt den Schwefelwasserstoff bereits direkt nach dem Eintritt in den Produktbereich des Reaktors, so dass der Produktbereich vor zu heißen Gaszonen und damit vor Korrosion geschützt wird.

Dabei ist es überraschend, dass zum Beispiel mit 350 °C aus dem Reaktor austretender Schwefel, der bereits wieder gering viskos ist, und zum Beispiel mit 120 °C zurücklaufender Schwefel, der noch nicht hochviskos ist, im Gegenstrom aneinander vorbeigeführt werden können, ohne dass hochviskoser Schwefel mit 200 °C das Verbindungsrohr blockiert. Es ist zwar bekannt, dass der aus dem Reaktor kommende Schwefel mit H₂S gesättigt ist und dass H₂S die Viskosität von Schwefel ca. um den Faktor 100 reduziert, dies kann aber nicht als ausreichend angesehen werden.

Gemäß einer bevorzugten Ausführungsform der vorliegenden Erfindung wird ein durch den Kühler abgekühlter H₂S-haltiger Rohgasstrom durch in einem Behälter enthaltene Aktivkohle bei einer Temperatur zwischen 114 und 165 °C (bevorzugt 127 bis 162 °C, besonders bevorzugt 135 bis 160 °C) geleitet und dabei anfallender Schwefel im Sumpf des Behälters aufgefangen.

In dem H₂S-haltigen Rohgasstrom können als Verunreinigungen Polysulfane (H₂Sₓ mit x ≥ 2) enthalten sein. Diese bilden sich zum Beispiel innerhalb eines bestimmten Temperaturbereichs beim Abkühlen eines heißen H₂S-haltigen Rohgasstroms, der aus einem Reaktor geleitet wird, in dem die H₂S-Synthese erfolgt. Oberhalb von 350 °C ist H₂Sₓ instabil und zerfällt in Schwefel und H₂S. Im Temperaturbereich von ca. 200 bis 290 °C reagiert H₂S in dem Rohgasstrom mit S zu H₂Sₓ. Bei Temperaturen unter 170 °C spielt die H₂Sₓ-Bildung keine wesentliche Rolle.

Die in dem H₂S-haltigen Rohgasstrom enthaltenen Polysulfane sollen sich nicht bei Abkühlung in der zur Herstellung des H₂S verwendeten Anlage niederschlagen und sich nicht nach einer bestimmten Verweilzeit in Schwefel und H₂S zersetzen, da Schwefelablagerungen die Folge wären. Daher werden der H₂S-haltige Rohgasstrom und die darin enthaltenen Polysulfane durch in dem dafür vorgesehenen Behälter enthaltene Aktivkohle geleitet, die als Katalysator zur kontrollierten Umwandlung von Polysulfanen in H₂S und Schwefel dient. In dem die Aktivkohle enthaltenden Behälter fällt daher aus der Umwandlung der Polysulfane Schwefel an und es können zusätzlich gegebenenfalls in dem Rohgasstrom enthaltene, mitgerissene Schwefeltropfen oder ein für die Synthese bereitgestellter Schwefelüberschuss anfallen.

Mitgerissene Schwefeltropfen und der Schwefelüberschuss werden jedoch bevorzugt in einem dem Behälter vorgeschalteten Kühler abgeschieden.

Der Rohgasstrom wird vorzugsweise bei Temperaturen von 114 bis 165 °C, bevorzugt 127 bis 162 °C, besonders bevorzugt 135 bis 160 °C durch die Aktivkohle geleitet. Durch das Halten der Temperatur des Gasstroms oberhalb von 114 °C während des Durchströmens der Aktivkohle wird sichergestellt, dass der anfallende Schwefel (aus der H₂Sₓ-Zersetzung und gegebenenfalls aus dem Rohgasstrom) in der Schmelze bleibt. Durch das Halten der Temperatur des Gasstroms unterhalb von 165°C bleibt die Viskosität des mit H₂S gesättigten Schwefels ausreichend gering. Dadurch kann der anfallende Schwefel aus der Aktivkohle (zum Beispiel einem Aktivkohlebett) ablaufen und in den Sumpf des die Aktivkohle enthaltenden Behälters gelangen. Der in dem Sumpf aufgefangene Schwefel kann zur Herstellung von H₂S (vorzugsweise in den zur H₂S-Synthese verwendeten Reaktor) zurückgeführt werden.

Durch das kontinuierliche Abführen des Schwefels aus dem die Aktivkohle enthaltenden Behälter wird die Aktivkohle nicht oder kaum mit Schwefel beladen. Ein Wechsel der Aktivkohle ist daher nicht oder nur selten notwendig, so dass ein geringer Verbrauch an Aktivkohle erreicht wird und Entsorgungskosten und Umweltschäden zum Beispiel bei Verbrennung der Kohle weitgehend vermieden werden können. Ferner kann auf einen zweiten Behälter mit Aktivkohle verzichtet werden, auf den beim Wechsel der Aktivkohle in dem ersten Behälter umgeschaltet werden müsste. Durch das Zurückführen des in dem Behälter anfallenden Schwefels in die Synthesereaktion kann der Rohstoffverbrauch gesenkt werden.

Der in dem die Aktivkohle enthaltenden Behälter anfallende Schwefel wird im Sumpf des Behälters aufgefangen und indirekt über den Kühler in den Reaktor in die Synthesereaktion zurückgeführt.

In dem die Aktivkohle enthaltenden Behälter ist jede dem Fachmann bekannte Aktivkohle verwendbar, insbesondere aus Holz, Steinkohle, Torf oder Kokosnussschalen hergestellte Aktivkohle. Es handelt sich vorzugsweise um Aktivkohleteilchen in einer Größe von 2 bis 15 mm, bevorzugt 3 bis 5 mm. Die Aktivkohle kann beispielsweise in Form von kleinen Zylindem mit einem Durchmesser von 4 mm vorliegen. Das Porenvolumen der Aktivkohle beträgt vorzugsweise mehr als 30 cm³/100 g. Die innere Oberfläche der Aktivkohle ist bevorzugt > 900 m²/g, besonders bevorzugt > 1100 m²/g. Die Aktivkohle kann eine oder mehrere Aktivkohlesorten umfassen. Beispielsweise können eine erste Schicht aus einer ersten Aktivkohlesorte und eine darauf angeordnete zweite Schicht aus einer zweiten Aktivkohlesorte in dem Aktivkohlebehälter verwendet werden.

Vorzugsweise wird der H₂S-haltige Rohgasstrom durch den die Aktivkohle enthaltenden Behälter mit einer Leerrohrverweilzeit von 1 bis 200 s, bevorzugt von 2 bis 100 s, besonders bevorzugt von 5 bis 80 s, ganz besonders bevorzugt von 10 bis 50 s geleitet. Die Leerrohrgeschwindigkeit beträgt dabei vorzugsweise 0,01 bis 1 m/s, bevorzugt 0,02 bis 0,5 m/s, besonders bevorzugt 0,04 bis 0,3 m/s, ganz besonders bevorzugt 0,05 bis 0,2 m/s. Der Druck in dem die Aktivkohle enthaltenden Behälter beträgt vorzugsweise 0,2 bis 20 bar, bevorzugt 0,4 bis 10 bar, besonders bevorzugt 0,8 bis 6 bar, ganz besonders bevorzugt 1 bis 5 bar absolut. Am Eingang des Behälters können eine Gasverteilereinrichtung, enthaltend Umlenkbleche, Einlassrohre und/oder perforierte Einlassrohre vorgesehen sein, um den Rohgasstrom in dem Behälter zu verteilen.

Gemäß einer bevorzugten Ausführungsform der vorliegenden Erfindung umfasst die erfindungsgemäße Vorrichtung einen Reaktor zur kontinuierlichen Herstellung von H₂S durch Umsetzung eines Eduktgemischs, welches im Wesentlichen gasförmigen Schwefel und Wasserstoff enthält, an einem Katalysator, wobei der Reaktor eine Schwefelschmelze in einem unteren Teil des Reaktors umfasst, in welche mittels einer Zuführeinrichtung gasförmiger Wasserstoff eingeleitet werden kann. Der Katalysator ist (vorzugsweise als Festbett) in mindestens einem U-förmigen Rohr angeordnet, welches teilweise in Kontakt mit der Schwefelschmelze steht, wobei das mindestens eine U-förmige Rohr mindestens eine oberhalb der Schwefelschmelze angeordnete Eintrittsöffnung in einem Schenkel aufweist, durch die das Eduktgemisch aus einem Eduktbereich des Reaktors in das U-förmige Rohr eintreten kann, einen Strömungsweg innerhalb des mindestens einen U-förmigen Rohrs aufweist, entlang dessen das Eduktgemisch in einem Reaktionsbereich umgesetzt werden kann, in dem der Katalysator angeordnet ist, und das mindestens eine U-förmige Rohr mindestens eine Austrittsöffnung in einem anderen Schenkel aufweist, durch die ein Produkt in einen (von dem Eduktbereich getrennten) Produktbereich austreten kann.

Der Reaktor umfasst vorzugsweise einen zylinder- oder prismenförmigen zentralen Körper, umgeben von einem Reaktormantel, der an beiden Enden durch je eine Haube geschlossen ist. Die Hauben können jede geeignete Form aufweisen, beispielsweise halbkugelförmig oder konisch ausgebildet sein.

Der Reaktor ist vorzugsweise in einem unteren Teil mit einer Schwefelschmelze gefüllt. In die Schwefelschmelze kann über eine Zuführeinrichtung gasförmiger Wasserstoff eingeleitet werden, wobei sich oberhalb der Schwefelschmelze ein Eduktgemisch enthaltend im Wesentlichen gasförmigen Schwefel und gasförmigen Wasserstoff in einem Eduktbereich sammelt, der mit der Schwefelschmelze über eine Phasengrenze in Kontakt steht und der nach oben vorzugsweise durch eine Unterteilung, beispielsweise durch einen Boden, begrenzt wird. In einer bevorzugten Ausführungsform der vorliegenden Erfindung ist der Boden in einem oberen Teil des Reaktors mit dem Reaktormantel verbunden, bevorzugt im oberen Drittel, besonders bevorzugt im oberen Viertel des Reaktorinnenraums.

In dem bevorzugt verwendeten Reaktor ist mindestens ein U-förmiges Rohr vorgesehen, das zumindest teilweise in Kontakt mit der Schwefelschmelze steht. Der Reaktor ist daher als eine Art Rohrbündelreaktor ausgebildet, mit Kontaktrohren, die U-förmig gestaltet sind. Ein solches U-förmiges Rohr weist zwei Schenkel auf, die an ihren unteren Enden durch einen bogenförmigen Bereich miteinander verbunden sind. Die U-förmigen Rohre können jeweils unterschiedlich lange oder vorzugsweise gleich lange Schenkel aufweisen. Die U-förmigen Rohre können z.B. einen Schenkeldurchmesser zwischen 2 und 20 cm, insbesondere zwischen 2,5 und 15 cm, besonders bevorzugt zwischen 5 und 8 cm aufweisen. Das mindestens eine U-förmige Rohr ist vorzugsweise senkrecht in dem Reaktor angeordnet, wobei sich der bogenförmige Bereich unten und die beiden Enden der Schenkel oben befinden.

Innerhalb des mindestens einen U-förmigen Rohrs ist vorzugsweise ein Katalysator zur Umsetzung von Wasserstoff und Schwefel zu H₂S angeordnet, wodurch ein Reaktionsbereich bereitgestellt wird. Als Reaktionsbereich wird im Zusammenhang mit der vorliegenden Erfindung derjenige Bereich innerhalb der U-förmigen Rohre bezeichnet, in dem sich der Katalysator befindet. Die Umsetzung der Edukte erfolgt hauptsächlich in dem Reaktionsbereich, der den Katalysator enthält. Die Bereitstellung eines Reaktionsbereichs in U-förmigen Rohren erlaubt eine bzgl. der Reaktorlänge kompakte Bauweise des Reaktors, da der zur Umsetzung von Wasserstoff mit Schwefel zu H₂S vorgesehene Reaktionsbereich auf beide Schenkel je eines U-förmigen Rohrs aufgeteilt werden kann. Durch Einsatz des Katalysators kann die Umsetzung zu H₂S bei moderaten Temperaturen und bei niedrigem Druck durchgeführt werden. Der Katalysator ist vorzugsweise in Form eines geschütteten Festbettes in dem mindestens einen U-förmigen Rohr angeordnet.

Bei der Herstellung von Schwefelwasserstoff unter Verwendung der bevorzugten Ausführungsform des Reaktors tritt das Eduktgemisch aus dem Eduktbereich in einen Schenkel des mindestens einen U-förmigen Rohrs durch mindestens eine Eintrittsöffnung ein. Die Eintrittsöffnung ist in einem Schenkel des mindestens einen U-förmigen Rohres oberhalb der Schwefelschmelze angeordnet. Die Eintrittsöffnung mündet aus dem Eduktbereich in den einen Schenkel des U-förmigen Rohrs. Der Abstand zwischen der Phasengrenze der Schwefelschmelze und der Eintrittsöffnung des U-förmigen Rohrs wird so gewählt, dass möglichst wenig flüssiger Schwefel in Form von Tröpfchen mit dem Strom des Eduktgemischs in den Innenraum der U-förmigen Rohre mitgerissen wird. Der Abstand zwischen Eintrittsöffnung und Phasengrenze der Schwefelschmelze liegt vorzugsweise zwischen 0,3 und 3 m, insbesondere zwischen 0,6 und 2,5 m, besonders bevorzugt zwischen 0,9 und 2 m.

Bei der Herstellung von Schwefelwasserstoff unter Verwendung der bevorzugten Ausführungsform des Reaktors durchströmt das Eduktgemisch das U-förmige Rohr entlang eines Strömungsweges, d.h. es durchströmt zunächst nach dem Eintritt durch die Eintrittsöffnung einen Schenkel des U-förmigen Rohres von oben nach unten, tritt durch den bogenförmigen Bereich des U-förmigen Rohrs in den zweiten Schenkel ein und durchströmt anschließend den zweiten Schenkel von unten nach oben. Das Eduktgemisch wird hauptsächlich in dem Reaktionsbereich, der innerhalb des U-förmigen Rohres enthalten ist, an dem dort angeordneten Katalysator umgesetzt. Durch eine Austrittsöffnung in dem zweiten Schenkel des U-förmigen Rohrs tritt das das Produkt enthaltende Gas in einen (vorzugsweise oberhalb der Schwefelschmelze und oberhalb des Eduktbereichs in dem Reaktor angeordneten) Produktbereich ein, der von dem Eduktbereich (z.B. durch einen Boden) getrennt ist.

Dem Reaktor wird vorzugsweise über eine geeignete Zuführeinrichtung gasförmiger Wasserstoff und flüssiger Schwefel zugeführt. An geeigneter Stelle wird das Produkt Schwefelwasserstoff, beispielsweise an einer oberen Haube, aus dem Produktbereich des Reaktors geleitet.

Die beiden Schenkel eines U-förmigen Rohres sind vorzugsweise jeweils an ihrem oberen Ende mit einem Boden des Reaktors verbunden, der wiederum in einem oberen Teil des Reaktors an dem Reaktormantel in geeigneter Weise befestigt ist. Der Boden unterteilt den Reaktor vorzugsweise in zwei Teilbereiche, insbesondere legt er einen darüber liegenden Produktbereich fest. Die bevorzugte Befestigung des mindestens einen U-förmigen Rohrs an einem mit dem Reaktormantel verbundenen Boden erlaubt thermische Längenänderungen des Reaktors und der U-förmigen Rohre unabhängig voneinander, da das U-Rohrbündel nur über den Boden am Mantel des Reaktors befestigt ist, so dass bei der Konstruktion des Reaktors auf Kompensatoren verzichtet werden kann. Durch die Verbindung der U-förmigen Rohre mit dem Boden an den oberen Enden ihrer Schenkel wird vorteilhafterweise erreicht, dass sich die Rohre entsprechend der Schwerkraft stabilisieren.

Gemäß einer bevorzugten Ausführungsform der vorliegenden Erfindung ist in einem oberen Abschnitt des Reaktors, vorzugsweise nahe der oberen Haube, ein Boden angeordnet, der den Reaktorinnenraum in einen darunter liegenden unteren Teilbereich und einen darüber liegenden oberen Teilbereich einteilt.

Der obere Teilbereich enthält vorzugsweise den Produktbereich, der während des Betriebs des Reaktors hauptsächlich das Produkt Schwefelwasserstoff enthält. Mit dem Produktbereich steht jeweils ein Schenkel der U-förmigen Rohre in offener Verbindung.

Der untere Teilbereich des Reaktors enthält vorzugsweise den Eduktbereich direkt unterhalb des Bodens und darunter eine Schwefelschmelze, in die flüssiger Schwefel aus einer externen Quelle und/oder als Rücklauf eingespeist wird. Die U-förmigen Rohre stehen teilweise in thermischem Kontakt mit der Schwefelschmelze, vorzugsweise sind sie teilweise direkt in der Schwefelschmelze angeordnet, tauchen also in die Schwefelschmelze ein. Somit findet eine Übertragung der bei der exothermen Reaktion zu H₂S freiwerdenden Wärmeenergie über das mindestens eine U-förmige Rohr in die umgebende Schwefelschmelze statt. Die Reaktionswärme wird für eine Verdampfung des darin enthaltenen Schwefels genutzt. Diese Wärmekopplung ermöglicht ein energetisch günstiges Verfahren, bei dem externe Wärmezufuhr erheblich reduziert oder nicht notwendig ist. Gleichzeitig kann eine Überhitzung des Katalysators vermieden werden, wodurch sich die Standzeiten des Katalysators erhöhen.

Für eine gute Übertragung der Wärmeenergie wird vorzugsweise der Wärmewiderstand der Katalysatorschüttung im Reaktionsbereich möglichst gering gehalten. Vorzugsweise wird für die Umsetzung der Edukte zu H₂S eine Vielzahl von Katalysator enthaltenden U-förmigen Rohren bereitgestellt, so dass der jeweilige Weg vom Kern der Katalysatorschüttung zur Wand des Rohrs gering ist. Vorzugsweise liegt ein Verhältnis der Summe der Querschnittsflächen aller Kontaktrohre (bzw. aller Schenkel der U-förmigen Kontaktrohre) bezogen auf die Querschnittsfläche des (vorzugsweise zylindrischen) Reaktorkörpers zwischen 0,05 und 0,9, insbesondere zwischen 0,15 und 0,7, besonders bevorzugt zwischen 0,2 und 0,5, ganz besonders bevorzugt zwischen 0,25 und 0,4.

Damit ein ausreichender thermischer Kontakt für die Wärmeübertragung von dem U-förmigen Rohr in die umgebende Schwefelschmelze besteht, wird angestrebt, dass 20 bis 100 % der äußeren Mantelfläche eines jeweiligen U-förmigen Rohres entlang des den Katalysator enthaltenden Reaktionsbereichs in Kontakt mit der Schwefelschmelze steht. Damit die Wärmeübertragung in die Schwefelschmelze gut funktioniert, sollte dort, wo die Reaktion im U-förmigen Rohr stattfindet, die äußere Mantelfläche des U-förmigen Rohrs entlang des den Katalysator enthaltenden Reaktionsbereichs zu mehr als 20 %, bevorzugt zu mehr als 50%, besonders bevorzugt zu mehr als 80% von der Schwefelschmelze umgeben sein. Bei einem zu geringen Füllstand der Schwefelschmelze in dem Reaktor und damit einem zu geringen Kontakt von U-förmigen Rohr und Schwefelschmelze besteht die Gefahr, dass die Reaktionswärme nicht ausreichend abgeführt wird.

In Strömungsrichtung des Eduktgemischs innerhalb des mindestens einen U-förmigen Rohres kann das Eduktgemisch nach dem Eintreten in das U-förmige Rohr zunächst eine Inertschüttung durchströmen, wobei eventuell mitgerissener, in Form von Tröpfchen enthaltener flüssiger Schwefel an dieser Inertschüttung aus dem Eduktgemisch abgeschieden wird. Beispielsweise kann ein Anteil an flüssigem Schwefel in dem gasförmigen Wasserstoff und Schwefel enthaltenden Eduktgemisch von bis zu 100.000 Gew.-ppm vorliegen. Für die Schwefeltropfenabscheidung ist bevorzugt ein Anteil der Inertschüttung, bezogen auf die Gesamtschüttung aus Inertschüttung und Katalysatorschüttung, von 1 bis 30 %, insbesondere von 2 bis 25 %, bevorzugt von 5 bis 20 %, besonders bevorzugt von 8 bis 16 % in dem mindestens einen U-förmigen Rohr vorgesehen. Die Inertschüttung kann aus Körpern beliebiger Gestalt, beispielsweise aus Satteln oder vorzugsweise aus Kugeln, bestehen, welche aus einem geeigneten Material, beispielsweise Zirkonoxid oder vorzugsweise Aluminiumoxid, sind.

Vorzugsweise wird gasförmiger Wasserstoff über eine Zuführeinrichtung in die Schwefelschmelze in den Reaktor eingeleitet und über eine Verteilereinrichtung in der Schwefelschmelze verteilt.

Die Zuführeinrichtung umfasst vorzugsweise ein in dem Reaktor senkrecht angeordnetes, an beiden Enden offenes Rohr, welches unterhalb der Verteilereinrichtung angeordnet ist und dessen oberes Ende vorzugsweise in den Raum, der von der Verteilerplatte und dem sich nach unten erstreckenden Rand begrenzt wird, hineinragt und besonders bevorzugt in die Wasserstoffblase hineinragt. Durch ein Hineinragen in den Raum unter der Verteilerplatte und insbesondere in die darunter ausgebildete Wasserstoffblase wird in vorteilhafter Weise ein ungleichmäßiger Wasserstoffeintrag in die Schwefelschmelze vermieden.

In das senkrechte Rohr der Zuführeinrichtung mündet vorzugsweise seitlich ein schräg verlaufendes Einleitrohr, durch welches der Wasserstoff von außerhalb des Reaktors eingeleitet wird. Die Zuführeinrichtung ist vorteilhafter Weise so gestaltet, dass in das senkrecht angeordnete Rohr eintretender Schwefel frei nach unten abfließen kann, ohne die Zuführeinrichtung für den Wasserstoff zu verstopfen. Der Wasserstoff steigt in dem senkrecht angeordneten Rohr nach oben und sammelt sich unterhalb der Verteilereinrichtung.

Die Verteilereinrichtung umfasst vorzugsweise eine in dem Reaktor horizontal angeordnete Verteilerplatte mit Durchgangsöffnungen und einen sich nach unten erstreckenden Rand. Die vorzugsweise ebene Verteilerplatte erstreckt sich vorzugsweise nahezu über die gesamte Querschnittsfläche des Reaktors, wobei zwischen Reaktormantel und Verteilereinrichtung ein Spalt verbleibt. Der Spalt zwischen dem Rand der Verteilereinrichtung und dem Reaktormantel hat vorzugsweise eine Breite zwischen 1 und 50 mm, insbesondere zwischen 2 und 25 mm, besonders bevorzugt zwischen 5 und 10 mm. Die Form der Verteilerplatte richtet sich nach der Geometrie des Reaktors, in welchem sie angeordnet wird. Sie kann beispielsweise kreisförmig oder mehreckig sein oder jede andere beliebige Form aufweisen. Vorzugsweise können am Außenumfang der Verteilerplatte Aussparungen vorgesehen sein, welche Durchführungsöffnungen z.B. für eine Wasserstoffeinleitung, eine Schwefeleinleitung und eine Schwefelrückführung bereitstellen. Somit kann der Spalt zwischen Verteilereinrichtung und Reaktormantel nur eine geringe Breite aufweisen, so dass ein starkes Schwingen der Verteilereinrichtung in dem Reaktor vermieden wird. Der unterhalb der Verteilereinrichtung eingeleitete Wasserstoff staut sich unterhalb dieser Verteilerplatte zu einer Wasserstoffblase in dem Raum auf, der durch den sich nach unten erstreckenden Rand und der Verteilerplatte begrenzt wird. Vorzugsweise wird die Verteilerplatte in dem Reaktor horizontal angeordnet, so dass die sich unterhalb der Verteilerplatte aufstauende Wasserstoffblase nahezu konstante Höhe aufweist. Durch die Durchgangsöffnungen in der Verteilerplatte dispergiert der aufgestaute Wasserstoff gleichmäßig verteilt aus der Wasserstoffblase in die über der Verteilerplatte befindliche Schwefelschmelze. Die Anzahl der Durchgangsöffnungen in der Verteilerplatte richtet sich unter anderem nach dem Volumenstrom des eingeleiteten Wasserstoffs und beträgt vorzugsweise 2 bis 100, insbesondere 4 bis 50, besonders bevorzugt 8 bis 20 pro 100 Norm-m³/h. Die Durchgangsöffnungen können z.B. kreisförmig oder als Schlitze ausgebildet sein, wobei bevorzugte Durchmesser bzw. Schlitzbreiten bei 2 bis 30 mm, bevorzugt 5 bis 20 mm, besonders bevorzugt 7 bis 15 mm liegen. Die Durchgangsöffnungen sind in der Verteilerplatte vorzugsweise regelmäßig angeordnet. Der Flächenanteil der Durchgangsöffnungen, bezogen auf die Fläche der Verteilerplatte, liegt vorzugsweise zwischen 0,001 und 5 %, bevorzugt zwischen 0,02 und 1 %, besonders bevorzugt zwischen 0,08 und 0,5 %.

Um eine gute Durchmischung der Schwefelschmelze durch den aufsteigenden Wasserstoff zu erreichen und somit ein möglichst effizientes Strippen des Schwefels in den aufsteigenden Wasserstoff zu gewährleisten, liegt die Gasgeschwindigkeit des durch die Durchgangsöffnungen dispergierten Wasserstoffs vorzugsweise bei 20 bis 500 m/s, insbesondere 50 bis 350 m/s, bevorzugt 90 bis 350 m/s, besonders bevorzugt 150 bis 250 m/s.

Kommt es insbesondere bei einer Temperaturabsenkung zum Eindringen von Schwefel in die Durchgangsöffnungen, der sich in den Durchgangsöffnungen verfestigt, ist die Wasserstoffverteilung an der Verteilereinrichtung durch die Durchgangsöffnungen gehemmt. Der aufgestaute Wasserstoff kann dann auch über den Randbereich des sich nach unten erstreckenden Randes in die Schwefelschmelze dispergieren, wobei der Wasserstoff aus der Wasserstoffblase dann in der in einem Spalt zwischen Verteilereinrichtung und Reaktormantel enthaltenen Schwefelschmelze verteilt wird. Vorzugsweise ist der Randbereich der Verteilereinrichtung zackenförmig ausgebildet, wodurch der darunter aufgestaute Wasserstoff in feine Gasblasen verteilt dispergiert.

Beim einfachen Einleiten von Wasserstoff z.B. über ein senkrechtes Einleitrohr ohne eine derartige Verteilereinrichtung in die Schwefelschmelze kann sich eine inhomogene Wasserstoffverteilung ergeben. In der Nähe des Einleitrohres steigen in der Schwefelschmelze große Blasen von Wasserstoff auf. In anderen Regionen der Schwefelschmelze liegt dann kaum Wasserstoff vor. Dadurch können Schwingungen der U-förmigen Rohre angeregt werden. Die vorzugsweise in dem erfindungsgemäßen Reaktor enthaltene, wie eine nach unten offene Glocke gestaltete Verteilereinrichtung dient daher auch zur Stabilisierung der U-förmigen Rohre des Rohrbündels in der bevorzugten Ausführungsform des Reaktors.

Um eine größere Stabilität der U-förmigen Rohre zu erzielen, kann das mindestens eine U-förmige Rohr nahe seinem unteren bogenförmigen Bereich mit der Verteilereinrichtung verbunden werden, die durch ihre Dimensionierung den Schwingungsbereich des U-förmigen Rohrs bzw. des entsprechenden Rohrbündels in horizontaler Richtung begrenzt. Hierbei ist die Verteilereinrichtung ihrerseits nicht direkt mit dem Reaktormantel des Reaktors verbunden, sondern ist vielmehr indirekt über die Verbindung der U-förmigen Rohre mit dem Boden mit dem Reaktormantel verbunden. Dadurch können Probleme durch Spannungen zwischen Reaktor, U-förmigen Rohren und Verteilereinrichtung, hervorgerufen durch thermische Längenänderungen, vermieden werden.

In einer Ausführungsform wird die Verteilerplatte mit den jeweiligen Schenkeln des mindestens einen U-förmigen Rohres nahe des unteren Endes des U-förmigen Rohrs verbunden, beispielsweise verschweißt, wobei sich ein Abschnitt des U-förmigen Rohrs, der zumindest einen Teil des bogenförmigen Bereichs umfasst, unterhalb der Verteilerplatte befindet. Da dieser Abschnitt des U-förmigen Rohrs nicht in Kontakt mit der Schwefelschmelze steht, sondern vielmehr in den Bereich der unter der Verteilereinrichtung aufgestauten Wasserstoffblase ragt, enthält das U-förmige Rohr in diesem Abschnitt vorzugsweise keine Katalysatorschüttung. Somit findet keine Umsetzung zu H₂S statt und es entsteht keine exotherme abzuführende Reaktionswärme. Innerhalb des mindestens einen U-förmigen Rohres können Unterteilungen vorgesehen sein, die den Bereich der Katalysatorschüttung von dem Bereich ohne Schüttung trennt, wobei die Unterteilungen jedoch für Edukte und Produkte der H₂S-Herstellung durchlässig sein müssen.

Bei der vorliegenden Erfindung sind vorzugsweise eine Zuführ- und eine Verteilereinrichtung für gasförmigen Wasserstoff in einem unteren Abschnitt des Reaktors, z.B. nahe der unteren Haube, vorgesehen. Der mittels der Zuführeinrichtung in die Schwefelschmelze eingeleitete Wasserstoff steigt in Form von durch die Verteilereinrichtung verteilten Gasblasen durch die Schmelze, wodurch Schwefel aus der Schmelze gestrippt wird, und staut sich (z.B. unterhalb eines oberen Bodens des Reaktors) in dem Eduktbereich des Reaktors als Eduktgemisch auf, das über eine Phasengrenze mit der Schwefelschmelze in Kontakt steht.

Das Verfahren zur kontinuierlichen Herstellung von H₂S umfasst die Umsetzung eines Eduktgemischs, welches im Wesentlichen gasförmigen Schwefel und Wasserstoff enthält, an einem festen Katalysator (heterogene Reaktion), wobei vorzugsweise eine Schwefelschmelze zumindest in einem unteren Teil des Reaktors bereitgestellt wird, in welche gasförmiger Wasserstoff eingeleitet wird. Bei dem Verfahren kann das Eduktgemisch zum Beispiel aus einem Eduktbereich in einen Schenkel mindestens eines U-förmigen Rohres durch mindestens eine oberhalb der Schwefelschmelze angeordnete Eintrittsöffnung eingeleitet, entlang eines Strömungsweges durch das mindestens eine U-förmige Rohr, welches teilweise in Kontakt mit der Schwefelschmelze steht, durchgeleitet und an einem im Strömungsweg in einem Reaktionsbereich angeordneten Katalysator umgesetzt werden. Ein Produkt kann aus mindestens einer Austrittsöffnung in einem anderen Schenkel des U-förmigen Rohres in einen (vorzugsweise von dem Eduktbereich getrennten) Produktbereich geleitet werden. Vorzugsweise wird die H₂S-Synthese in dem bereits beschriebenen Reaktor durchgeführt.

Das bevorzugte Verfahren zur Synthese von H₂S wird in dem Reaktor bei Temperaturen des Eduktgemischs und des den Katalysator enthaltenden Reaktionsbereichs von 300 bis 450°C, bevorzugt von 320 bis 425°C, besonders bevorzugt von 330 bis 400°C durchgeführt, wodurch die Korrosionsbelastung der gewählten Materialien der konstruktiven Elemente gering gehalten wird. Vorzugsweise beträgt die Temperatur der Schwefelschmelze zwischen 300 und 450°C, insbesondere zwischen 320 und 425°C, bevorzugt zwischen 330 und 400°C, besonders bevorzugt zwischen 350 und 360°C. Die Temperatur im Eduktraum über dem Schwefelbad beträgt vorzugsweise zwischen 300 und 450°C, insbesondere zwischen 320 und 425°C, bevorzugt zwischen 330 und 400°C, besonders bevorzugt zwischen 350 und 380°C. Das aus dem Reaktionsbereich in den Produktraum austretende Produktgemisch hat vorzugsweise eine Temperatur zwischen 300 und 450°C, insbesondere zwischen 320 und 425°C, bevorzugt zwischen 330 und 400°C, besonders bevorzugt zwischen 350 und 360°C. Die Drücke im Mantelraum des Reaktors und im Inneren der U-förmigen Rohre betragen 0,5 bis 10 bar, bevorzugt 0,75 bis 5 bar, besonders bevorzugt 1 bis 3 bar, ganz besonders bevorzugt 1,1 bis 1,4 bar absolut.

Der in dem bevorzugten Verfahren in den Reaktor eingeleitete Wasserstoff wird vorzugsweise an einer im unteren Abschnitt des Reaktors vorgesehenen Verteilereinrichtung in die Schwefelschmelze dispergiert. Zum einen erfolgt die Wasserstoffverteilung bevorzugt über eine im Reaktor horizontal angeordnete Verteilerplatte der Verteilereinrichtung durch die darin vorgesehenen Durchgangsöffnungen aus einer darunter aufgestauten Wasserstoffblase in die über der Verteilerplatte enthaltene Schwefelschmelze. Kommt es zu einer Hemmung des Durchtritts des Wasserstoffs durch die Durchgangsöffnungen, beispielsweise durch darin abgelagerten Schwefel, staut sich die Wasserstoffblase in dem durch die Verteilerplatte und den sich nach unten erstreckenden Rand der Verteilereinrichtung begrenzten Raum auf, so dass zum anderen Wasserstoff über den Randbereich des sich nach unten erstreckenden Randes in die diesen umgebende Schwefelschmelze verteilt wird. Dabei gelangt der Wasserstoff aus der Wasserstoffblase unter der Verteilereinrichtung durch einen Spalt zwischen Verteilereinrichtung und Reaktormantel in die über der Verteilereinrichtung vorhandene Schwefelschmelze. Auf diese Weise ist gewährleistet, dass der Wasserstoff in ausreichender Menge während der kontinuierlichen Herstellung von H₂S in der Schwefelschmelze verteilt wird.

Die Verdampfungsrate des Schwefels wird bei der vorliegenden Erfindung so eingestellt, dass das Eduktgemisch einen Schwefelüberschuss enthält. Der überschüssige Schwefel wird dann mit dem Produkt aus dem Produktbereich des Reaktors abgeleitet und nachträglich als Schmelze abgeschieden. Dieser flüssige Schwefel kann z. B. über eine in dem oberen Teilbereich des Reaktors angeordnete Sammel- und Ableitkonstruktion, unter anderem umfassend einen Sammelboden und ein davon ausgehendes, in die Schwefelschmelze getauchtes Rücklaufrohr, in die im unteren Teilbereich des Reaktors enthaltene Schwefelschmelze zurückgeführt werden. Vorzugsweise erfolgt eine Kühlung der aus dem Reaktor austretenden H₂S-Gase in einem Wärmetauscher, der als Kühler dient, wobei der überschüssige Schwefel auskondensiert und über die Sammel- und Ableitkonstruktion zurück in die Schwefelschmelze geleitet wird. Als Kühlmedium kann in einem Sekundärkreislauf warmes Druckwasser eingesetzt werden.

Gemäß einer bevorzugten Ausführungsform des Verfahrens umfasst dieses die Schritte
- Reagieren von gasförmigem Schwefel und Wasserstoff an einem festen Katalysator in einem Reaktor bei einem Schwefelüberschuss zum Erhalten eines H₂S-haltigen Rohgasstroms,
- Kühlen des Rohgasstroms auf 114 bis 165 °C, bevorzugt 127 bis 163 °C, besonders bevorzugt 135 bis 161 °C, in einem Kühler zum Abscheiden von überschüssigem Schwefel und
- Leiten des Rohgasstroms aus dem Kühler in einen Aktivkohle enthaltenden Behälter.

Gemäß einer bevorzugten Ausführungsform der vorliegenden Erfindung wird der im Sumpf des die Aktivkohle enthaltenden Behälters aufgefangene Schwefel über den Kühler in den Reaktor zurückgeführt. Vorzugsweise wird dazu eine Leitung zwischen dem Kühler und dem die Aktivkohle enthaltenden Behälter bereitgestellt, durch die der Rohgasstrom in einer Richtung von dem Kühler in den Behälter und durch die im Sumpf des Behälters aufgefangener Schwefel in einer entgegengesetzten Richtung von dem Behälter in den Kühler geleitet wird. Der sich in dem Behälter zum Beispiel bei der Zersetzung von H₂Sₓ bildende Schwefel läuft aus der Aktivkohle (zum Beispiel einem Aktivkohlebett) ab und wird im Sumpf des Behälters gesammelt. Die Temperaturen in dem Behälter sind so gewählt, dass der Schwefel flüssig ist und daher in den Sumpf und von dort aus in die Leitung zum Kühler fließen kann. Durch das Anordnen einer einzigen Leitung zwischen dem die Aktivkohle enthaltenden Behälter und dem Kühler zum Leiten des gekühlten Rohgasstroms in einer Richtung von dem Kühler in den Behälter und zum Zurückführen von Schwefel in der entgegengesetzten Richtung aus dem Sumpf des Behälters in den Kühler werden wiederum Flansche eingespart, die mögliche Leckagestellen darstellen können. Die Rohrleitungsführung vereinfacht sich.

Vorzugsweise werden die flüssigen oder gasförmigen Schwefel führenden Leitungen der Vorrichtung, insbesondere die Leitung zwischen dem die Aktivkohle enthaltenden Behälter und dem Kühler, zwischen Reaktor und Kühler und/oder die Schwefelzulaufleitung des Reaktors mit Gefälle ausgeführt. Ferner werden diese Leitungen bevorzugt mit einer Temperierung auf 100 bis 170 °C ausgeführt. Dazu geeignet ist die Verwendung von Doppelmantelleitungen oder die Ummantelung der Leitungen mit temperierbaren Wellschläuchen oder eine elektrische Begleitheizung. Bevorzugt werden Doppelmantelleitungen oder Wellschläuche verwendet. Als Temperiermedien im Doppelmantel oder im Wellschlauch sind beispielsweise Wasserdampf oder flüssiges Wasser unter erhöhtem Druck geeignet.

Anhand der Zeichnung wird die Erfindung nachstehend näher erläutert.

### Es zeigt

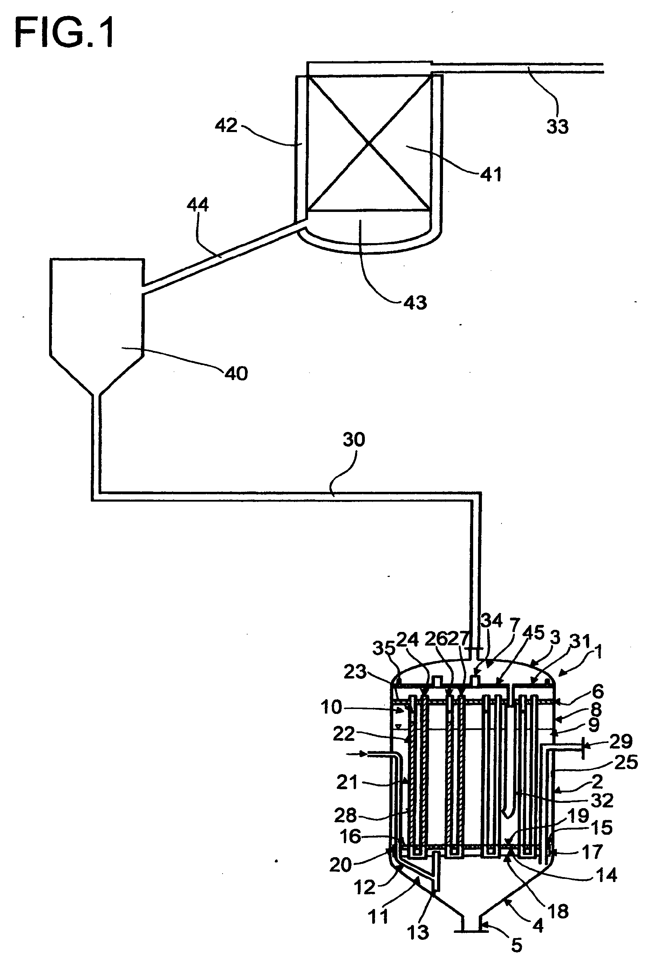

- Figur 1: eine schematische Darstellung einer bevorzugten Ausführungsform einer erfindungsgemäßen Vorrichtung.

Die Vorrichtung gemäß Figur 1 ist zur Durchführung des Verfahrens geeignet. Sie umfasst einen Reaktor 1 zum Umsetzen von Schwefel und Wasserstoff, einen mit dem Reaktor 1 verbundenen Kühler 40 zum Kühlen eines aus dem Reaktor 1 geleiteten H₂S-haltigen Rohgasstroms auf 114 bis 165 °C, und einen mit dem Kühler 40 verbundenen, Aktivkohle 41 enthaltenden Behälter 42 mit einem Sumpf 43 zum Auffangen von in dem Behälter 42 bei 114 bis 165 °C aus einem Polysulfane enthaltenden Rohgasstrom anfallenden Schwefel. Mit dem Sumpf 43 des Behälters 42 ist eine Leitung 44 verbunden, die in den Kühler 40 mündet, zum Zurückführen von Schwefel (über den Kühler 40) in den Reaktor 1.

Der Reaktor 1 ist an beiden Seiten eines zylindrischen Körpers 2 mit Hauben 3, 4 geschlossen. An der oberen Haube 3 kann ein Produkt abgezogen werden. An der unteren Haube 4 befindet sich ein Ablassstutzen 5, um eventuell den Inhalt des Reaktors 1 vollständig abzulassen. In einem oberen Abschnitt des Reaktors 1 ist ein Boden 6 vorgesehen, der einen oberen Teilbereich mit einem Produktbereich 7 von einem unteren Teilbereich 8 abtrennt. Der Boden 6 ist mit einem Reaktormantel 25 des Reaktors 1 verbunden. Der untere Teilbereich 8 ist teilweise mit einer Schwefelschmelze 9 gefüllt, die über eine Phasengrenze mit einem Eduktbereich 10 in Kontakt steht, der nach oben durch den Boden 6 begrenzt wird. Der Eduktbereich 10 enthält hauptsächlich gasförmigen Wasserstoff und Schwefel.

Der Wasserstoff wird über eine Zuführeinrichtung 11 in einen unteren Abschnitt des Reaktors 1, beispielsweise in der unteren Haube 4, in die Schwefelschmelze 9 eingeleitet. Die Zuführeinrichtung 11 umfasst eine schräg verlaufende Leitung 12, die seitlich in ein im Reaktor 1 senkrecht angeordnetes, nach oben und unten offenes Rohr 13 mündet. Das obere Ende des Rohres 13 ragt in einen Raum 14 hinein, der durch eine Verteilereinrichtung 15 begrenzt wird. Die Verteilereinrichtung 15 umfasst eine im Reaktor 1 horizontal angeordnete Verteilerplatte 16 und einen sich nach unten erstreckenden Rand 17, der einen vorzugsweise zackenförmig ausgebildeten Randbereich 18 aufweist. Der über die Zuführeinrichtung 11 eingeleitete Wasserstoff steigt in dem senkrechten Rohr 13 nach oben und staut sich unterhalb der Verteilerplatte 16 zu einer Wasserstoffblase auf. Durch Durchgangsöffnungen 19 in der Verteilerplatte 16 dispergiert der Wasserstoff in die darüber befindliche Schwefelschmelze 9 und steigt innerhalb der Schwefelschmelze 9 in Form von Gasblasen nach oben, wobei Schwefel aus der Schwefelschmelze 9 gestrippt wird. Dadurch bildet sich oberhalb der Schwefelschmelze 9 in dem Eduktbereich 10 ein Eduktgemisch, enthaltend gasförmigen Wasserstoff und Schwefel, aus.

Sind die Durchgangsöffnungen 19 in der Verteilerplatte 16 für den Wasserstoffdurchtritt versperrt, so kann der Wasserstoff auch aus der unterhalb der Verteilerplatte 16 aufgestauten Wasserstoffblase über den Randbereich 18 in einen Spalt 20 zwischen dem Reaktormantel 25 und dem Rand 17 der Verteilereinrichtung 15 in die Schwefelschmelze 9 dispergieren.

Im zylindrischen Körper des Reaktors 1 sind Rohre 21 angeordnet, welche U-förmig ausgebildet sind. Die U-förmigen Rohre 21 sind an ihren beiden Schenkeln 26,27 mit dem Boden 6 verbunden. Die Verbindung der Schenkel 26, 27 mit dem Boden 6 kann durch eine Schweißnaht hergestellt werden. Die U-förmigen Rohre 21 tauchen teilweise in die Schwefelschmelze 9 ein, wodurch die Möglichkeit eines direkten Wärmeaustausches zwischen dem Innenraum der Rohre 21 und der Schwefelschmelze 9 über die äußere Mantelfläche 28 der Rohre 21 gegeben ist. Innerhalb jedes U-förmigen Rohrs 21 ist ein Katalysatorfestbett 22 angeordnet, welches in beiden Schenkeln 26, 27 der U-förmigen Rohre 21 vorgesehen ist.

Wie in Figur 1 gezeigt, ist die Verteilereinrichtung 15 mit den U-förmigen Rohren 21 verbunden, wobei ein Teil und insbesondere der Übergang von einem Schenkel 26 zum zweiten Schenkel 27 der jeweiligen U-förmigen Rohre 21 unterhalb der Verteilerplatte 16 durch den Raum 14 verläuft. Da dieser Abschnitt der U-förmigen Rohre 21 in die aufgestaute Wasserstoffblase ragt und nicht in direktem Kontakt mit der Schwefelschmelze 9 steht, enthält dieser Abschnitt keinen Katalysator. Zwischen der Verteilereinrichtung 15 und dem Reaktormantel 25 ist der Spalt 20 positioniert. Die Verteilereinrichtung 15 ist nicht direkt mit dem Reaktormantel 25 verbunden.

In dem Reaktor 1 läuft die Synthese von Schwefelwasserstoff wie folgt ab. Ein Eduktgemisch tritt aus dem Eduktbereich 10 durch eine oder mehrere am Umfang eines Schenkels 26 jedes der U-förmigen Rohre 21 angeordnete Eintrittsöffnungen 23 in den Innenraum des einen Schenkels 26 des U-förmigen Rohres 21 ein, durchströmt die darin enthaltene Katalysatorschüttung 22, die durch eine vorgelagerte Inertschüttung ergänzt sein kann und wird entlang des Strömungsweges im Katalysatorfestbett 22 enthaltenden Reaktionsbereich weitgehend zu Schwefelwasserstoff umgesetzt.

Das Eduktgemisch wird bei einem Druck von 0,5 bis 10 bar (ganz besonders bevorzugt 1,1 bis 1,4 bar) absolut, einer Temperatur von 300 bis 450 °C und einem Schwefelüberschuss in dem Reaktor 1 umgesetzt. Der Schwefelüberschuss entspricht einem Verhältnis von überschüssigem Schwefel zu hergestelltem Schwefelwasserstoff von 0,2 bis 3 kg Schwefel pro kg hergestelltem Schwefelwasserstoff.

Das Produkt tritt an dem zweiten Schenkel 27 über mindestens eine Austrittsöffnung 24 in den Produktbereich 7 aus und kann gesammelt und von dort über Haube 3 ausgeleitet werden. Durch den direkten Kontakt der U-förmigen Rohre 21 mit der Schwefelschmelze 9 wird die bei der Umsetzung zu H₂S freiwerdende Reaktionswärme aus dem Katalysatorfestbett 22 in die Schwefelschmelze 9 über die äußere Mantelfläche 28 der U-förmigen Rohre entlang des Reaktionsbereichs abgegeben und für eine Schwefelverdampfung genutzt.

Um die Schwefelschmelze 9 während des Verfahrens in etwa in gleicher Höhe zu halten, werden gasförmiger Wasserstoff und flüssiger Schwefel in entsprechenden Mengen dem Reaktor1 kontinuierlich über die Zuführeinrichtung 11 und eine Schwefeleinleitung 29 zugeführt.

Zwischen dem Reaktor 1 und dem Kühler 40 ist eine erste Leitung 30 angeordnet, die zum Leiten des Rohgasstroms von dem Reaktor 1 in den Kühler 40 und zum Zurückführen von Schwefel in der entgegengesetzten Richtung aus dem Kühler 40 in den Reaktor 1 dient. Aus der ersten Leitung 30 gelangt der flüssige Schwefel zu einer im oberen Teilbereich des Reaktors 1 angeordneten Sammel- und Ableitkonstruktion 45. Diese Sammel- und Ableitkonstruktion 45 umfasst einen Sammelboden 31, an dem zum Durchleiten des Produktes aus dem unterhalb des Sammelbodens 31 befindlichen Produktbereich 7 in den darüber befindlichen Produktbereich 7 Einlassstutzen 34 angeordnet sind und einen Rand 35. Der abgeschiedene flüssige Schwefel wird auf einem Sammelboden 31, welcher horizontal in dem Produktbereich 7 des Reaktors 1 angeordnet ist, gesammelt und über ein in die Schwefelschmelze 9 eingetauchtes Rücklaufrohr 32 in die in dem unteren Teilbereich des Reaktors 8 enthaltene Schwefelschmelze 9 rückgeführt. Der Reaktor 1 ist bevorzugt isoliert, so dass der Energieverbrauch möglichst gering ist.

In dem Kühler 40 wird der aus dem Reaktor 1 stammende H₂S-haltige Rohgasstrom von ca. 350 °C auf 114 bis 165 °C abgekühlt. Dabei wird überschüssiger Schwefel auskondensiert, der durch die erste Leitung 30 in den Reaktor 1 zurückläuft. In dem Kühler 40 liegen Bedingungen vor, bei denen sich Polysulfane (H₂Sₓ) bilden können. Aus dem Kühler 40 wird ein H₂S-haltiger Rohgasstrom, der Polysulfane enthält, durch die zweite Leitung 44 in den die Aktivkohle 41 enthaltenden Behälter 42 geleitet. Die zwischen dem die Aktivkohle 41 enthaltenden Behälter 42 und dem Kühler 40 angeordnete zweite Leitung 44 dient sowohl zum Leiten des gekühlten Rohgasstroms in einer Richtung aus dem Kühler 40 in den Behälter 42, als auch zum Zurückführen von Schwefel in der entgegengesetzten Richtung aus dem Sumpf 43 des Behälters 42 in den Kühler 40.

Der mittels der Aktivkohle 41 gereinigte H₂S-haltige Strom wird aus dem Behälter 42 über eine weitere Leitung 33 abgeleitet.

### Beispiel

451 kg/hr Schwefel werden flüssig bei einer Temperatur von 144 °C in den Mantelraum eines Rohrbündelreaktors eingebracht. Gleichzeitig werden 28,2 kg/hr Wasserstoff eingetragen. Der isolierte Rohrbündelreaktor wird mit einer elektrischen Begleitheizung, die 16 kW einträgt, beheizt. Die Wärmeverluste durch die Isolation des Reaktors betragen 4 kW. Der Schwefel steht in dem Reaktor so hoch, dass die Reaktionsrohre in dem Bereich, wo sie Katalysator enthalten, von Schwefel umgeben sind. In dem Schwefelbad wird der durchperlende Wasserstoff mit Schwefel gesättigt. Die dafür notwendige Wärme stammt aus den Reaktionsrohren, die von dem Schwefelbad umgeben sind. Im Gasraum über dem Schwefelbad liegt eine Temperatur von 360 °C vor. Als Katalysator wird ein Co-Mo-Katalysator auf einem Träger aus Aluminiumoxid verwendet. Der mit Schwefel beladene Wasserstoff wird in die Reaktionsrohre geleitet, wo die Umsetzung zu Schwefelwasserstoff bei einer Temperatur von 360 bis 450 °C stattfindet. Die Katalysatorbelastung beträgt 0,3 Norm-m³ Wasserstoff/hr/kg Katalysator. An den Wänden des Apparates werden Temperaturen von 350 bis 380 °C gemessen. Der Druck im Reaktor beträgt 1,2 bar absolut. Das aus dem Reaktor austretende Gasgemisch, das aus Schwefelwasserstoff, den überschüssigen Schwefeldämpfen und aus Spuren von nicht umgesetztem Wasserstoff besteht, hat eine Temperatur von 358 °C. Das den Reaktor verlassende Gasgemisch wird im nachfolgenden Wärmetauscher teilkondensiert. Der den Kondensator verlassende Schwefelwasserstoffstrom hat eine Temperatur von 137 °C. Der auskondensierte, flüssige Schwefel, der bei einer Temperatur von 150 °C anfällt, wird in den Mantelraum des Reaktors zurückgeführt. Es entstehen 480 kg/hr H₂S mit einer Reinheit von mehr als 99,5 Vol.-%. Bei einem Betrieb der Anlage über eine Zeit von 0,5 Jahren sind keine Änderungen der Parameter notwendig, um eine Reinheit des H₂S von 99,5 Vol.-% zu erreichen. Die energetische Bilanzierung des Reaktors und des Teilkondensators ergibt, dass gleichzeitig 477 kg/hr flüssiger Schwefel aus dem Teilkondensator in den Reaktor zurückgeführt werden. Das eingestellte Verhältnis von rückgeführtem Schwefel zu entstandenem Schwefelwasserstoff beträgt 0,99 kg Schwefel pro 1 kg Schwefelwasserstoff.

**Bezugszeichenliste**

| | | | |
|---|---|---|---|
| 1 | Reaktor | 40 | Kühler |
| 2 | Reaktorkörper | 41 | Aktivkohle |
| 3 | Obere Haube | 42 | Behälter |
| 4 | Untere Haube | 43 | Sumpf |
| 5 | Ablassstutzen | 44 | zweite Leitung |
| 6 | Boden | 45 | Sammel- und Ableitkonstruktion |
| 7 | Produktbereich | | |
| 8 | Unterer Teilbereich des Reaktors | | |
| 9 | Schwefelschmelze | | |
| 10 | Eduktbereich | | |
| 11 | Zuführeinrichtung für Wasserstoff | | |
| 12 | Leitung | | |
| 13 | Senkrecht angeordnetes Rohr | | |
| 14 | Raum | | |
| 15 | Verteilereinrichtung | | |
| 16 | Verteilerplatte | | |
| 17 | Rand | | |
| 18 | Randbereich | | |
| 19 | Durchgangsöffnungen | | |
| 20 | Spalt | | |
| 21 | Rohre | | |
| 22 | Katalysatorfestbett | | |
| 23 | Eintrittsöffnung | | |
| 24 | Austrittsöffnung | | |
| 25 | Reaktormantel | | |
| 26 | Erster Schenkel | | |
| 27 | Zweiter Schenkel | | |
| 28 | Äußere Mantelfläche | | |
| 29 | Schwefeleinleitung | | |
| 30 | erste Leitung | | |
| 31 | Sammelboden | | |
| 32 | Rücklaufrohr | | |
| 33 | Leitung | | |
| 34 | Einlassstutzen | | |
| 35 | Rand | | |

## Patentansprüche

1. Vorrichtung zur kontinuierlichen Herstellung von Schwefelwasserstoff H₂S, umfassend
• einen Reaktor (1) zum Umsetzen eines Eduktgemischs, enthaltend gasförmigen Schwefel und Wasserstoff an einem festen Katalysator (22) bei einem Druck von 0,5 bis 10 bar absolut, einer Temperatur von 300 bis 450 °C und einem Schwefelüberschuss, der einem Verhältnis von überschüssigem Schwefel zu hergestelltem H₂S von 0,2 bis 3 kg Schwefel pro kg hergestelltem H₂S entspricht, und
• einen mit dem Reaktor (1) verbundenen Kühler (40) zum Kühlen eines aus dem Reaktor (1) geleiteten H₂S-haltigen Rohgasstroms zum Kondensieren mindestens eines Teils des Schwefelüberschusses,
wobei zwischen dem Reaktor (1) und dem Kühler (40) eine Leitung (30) angeordnet ist, zum Leiten des Rohgasstroms in einer Richtung von dem Reaktor (1) in den Kühler (40) und zum Zurückführen von Schwefel in einer entgegengesetzten Richtung aus dem Kühler (40) in den Reaktor (1) und
wobei mit dem Kühler (40) ein Aktivkohle (41) enthaltender Behälter (42) verbunden ist, der Aktivkohle (41) enthaltende Behälter (42) einen Sumpf zum Auffangen von in dem Behälter anfallendem Schwefel umfasst und zwischen dem Aktivkohle (41) enthaltenden Behälter (42) und dem Kühler (40) eine zweite Leitung (44) angeordnet ist zum Leiten des gekühlten Rohgasstromes in einer Richtung aus dem Kühler (40) in den Behälter (42) und zum Zurückführen von Schwefel in einer entgegengesetzten Richtung aus dem Sumpf (43) des Behälters (42) in den Kühler (40).

2. Vorrichtung gemäß Anspruch 1, **dadurch gekennzeichnet, dass** die Leitung (30) derart angeordnet ist, dass in den Reaktor (1) zurückgeführter Schwefel am Boden der Leitung (30) in den Reaktor zurückläuft.

3. Vorrichtung gemäß einem der Ansprüche 1 oder 2, **dadurch gekennzeichnet, dass** die Leitung (30) zwischen dem Reaktor (1) und dem Kühler (40) und/oder die zweite Leitung (44) zwischen dem die Aktivkohle (41) enthaltenden Behälter (42) und dem Kühler (41) mit Gefälle ausgeführt sind.

4. Vorrichtung gemäß einem der Ansprüche 1 bis 3, **dadurch gekennzeichnet, dass** die Leitung (30) zwischen dem Reaktor (1) und dem Kühler (40) und/oder die zweite Leitung (44) zwischen dem die Aktivkohle (41) enthaltenden Behälter (42) und dem Kühler (41) mit einer Temperierung auf 100 bis 170°C ausgeführt sind.

## Claims

1. An apparatus for continuously preparing hydrogen sulfide H₂S, comprising
• a reactor (1) for converting a reactant mixture comprising gaseous sulfur and hydrogen over a solid catalyst (22) at a pressure of from 0.5 to 10 bar absolute, a temperature of from 300 to 450°C and a sulfur excess which corresponds to a ratio of excess sulfur to H₂S prepared of from 0.2 to 3 kg of sulfur per kg of H₂S prepared, and
• a cooler (40) which is connected to the reactor (1) and is for cooling an H₂S-containing crude gas stream passed out of the reactor (1) to condense at least a portion of the sulfur excess,
a line (30) being arranged between the reactor (1) and the cooler (40) for passing the crude gas stream in a direction from the reactor (1) into the cooler (40) and for recycling sulfur in an opposite direction out of the cooler (40) into the reactor (1), and
a vessel (42) containing activated carbon (41) being connected to the cooler (40), the vessel (42) containing activated carbon (41) comprising a bottom for collecting sulfur which is obtained in the vessel, and a second line (44) being arranged between the vessel (42) containing activated carbon (41) and the cooler (40) for passing the cooled crude gas stream in a direction out of the cooler (40) into the vessel (42) and for recycling sulfur in an opposite direction from the bottom (43) of the vessel (42) into the cooler (40).

2. The apparatus according to claim 1, wherein the line (30) is arranged such that sulfur recycled into the reactor (1) passes back into the reactor at the bottom of the line (30).

3. The apparatus according to either of claims 1 and 2, wherein the line (30) between the reactor (1) and the cooler (40) and/or the second line (44) between the vessel (42) containing the activated carbon (41) and the cooler (41) are configured with gradients.

4. The apparatus according to any of claims 1 to 3, wherein the line (30) between the reactor (1) and the cooler (40) and/or the second line (44) between the vessel (42) containing the activated carbon (41) and the cooler (41) are designed with heating to from 100 to 170°C.

## Revendications

1. Procédé de préparation continue d'hydrogène sulfuré H₂S, comprenant
- un réacteur (1), pour faire réagir un mélange de réactifs, contenant du soufre gazeux et de l'hydrogène sur un catalyseur solide (22) sous une pression de 0,5 à 10 bar absolus, à une température de 300 à 450°C et en présence d'un excès de soufre qui correspond à un rapport du soufre en excès au H₂S préparé de 0,2 à 3 kg de soufre par kg de H₂S préparé, et
- un réfrigérant (40), relié au réacteur (1), pour refroidir un courant de gaz brut contenant du H₂S, provenant du réacteur (1), pour condenser au moins une partie de l'excès de soufre,
dans lequel, entre le réacteur (1) et le réfrigérant (40), est disposée une conduite (30) pour envoyer le courant de gaz brut dans la direction allant du réacteur (1) au réfrigérant (40) et pour renvoyer le soufre dans la direction opposée du réfrigérant (40) au réacteur (1), et
dans lequel un récipient (42) contenant du charbon actif (41) est relié au réfrigérant (40), le récipient (42) contenant le charbon actif (41) comprend un fond pour recevoir le soufre produit dans le récipient, et une deuxième conduite (44) est disposée entre le récipient (42) contenant le charbon actif (41) et le réfrigérant (40), pour envoyer le courant de gaz brut refroidi dans la direction allant du réfrigérant (40) au récipient (42) et pour renvoyer le soufre dans la direction opposée du fond (43) du récipient (42) au réfrigérant (40).

2. Dispositif selon la revendication 1, **caractérisé en ce que** la conduite (30) est disposée de telle sorte que le soufre renvoyé dans le réacteur (1) reflue au fond de la conduite (30) dans le réacteur.

3. Dispositif selon l'une des revendications 1 ou 2, **caractérisé en ce que** la conduite (30) entre le réacteur (1) et le réfrigérant (40), et/ou la deuxième conduite (44) entre le récipient (42) contenant le charbon actif (41) et le réfrigérant (41), est réalisée avec une pente.

4. Dispositif selon l'une des revendications 1 à 3, **caractérisé en ce que** la conduite (30) entre le réacteur (1) et le réfrigérant (40) et/ou la deuxième conduite (44) entre le récipient (42) contenant la charbon actif (41) et le réfrigérant (41) est réalisée avec un équilibrage de température à 100 à 170°C.
